# EUROPEAN PATENT APPLICATION

(11) **EP 2 658 097 A1**
(43) Date of publication of application: **30.10.2013**
(21) Application number: 12165434.7
(22) Date of filing: 25.04.2012
(51) Int. Cl.: H02K 9/00, H02K 9/10, H02K 9/26

(54) **Electric machine and method for operating it**

(71) Applicant: Alstom Technology Ltd, 5400 Baden (CH)
(72) Inventor: Möbius, Jens, 5704 Egliswil (CH); Müller, Thorsten, 67363 Lustadt, Rheinland-Pfalz (DE)

(57) **Abstract**

The method for operating an electric machine (1) comprises regulating the gas pressure inside the casing (2) of the electric machine (1) as a function of a parameter indicative of the power output of the electric machine (1).

## Description

### TECHNICAL FIELD

The present disclosure relates to an electric machine and a method for operating it.

The electric machine is a rotating electric machine such as a synchronous generator to be connected to a gas or steam turbine (turbogenerator) or a synchronous generator to be connected to a hydro turbine (hydro generator) or an asynchronous generator or a synchronous or asynchronous electric motor or also other types of electric machines.

### BACKGROUND

Electric machines have a casing that houses a stator and a rotor. In addition, the casing contains a gas that is used to cool the stator and rotor during operation.

The gas can be in different embodiments air, hydrogen or other kind of gas.

When the gas is hydrogen usually its pressure inside the casing is higher than the atmospheric pressure. High pressure hydrogen helps cooling because the higher the hydrogen pressure inside the casing, the higher the cooling effect of the hydrogen. For example, the hydrogen pressure can be 5 or 6 bar.

Usually, the hydrogen pressure is optimised for operation of the electric machine at full load, such that the hydrogen is able to remove the heat generated during operation at full load.

Nevertheless, when the electric machine is not operating at full load, the hydrogen could cause an excessive cooling of the stator and/or rotor.

In addition, the hydrogen friction with the stator and rotor (and other components inside the casing) causes a lower efficiency than what obtainable with hydrogen inside the casing at a lower pressure.

### SUMMARY

An aspect of the disclosure includes providing an electric machine and a method by which excessive cooling of the stator and/or rotor can be counteracted.

Another aspect of the disclosure includes providing an electric machine and a method by which the efficiency can be increased, in particular when the electric machine does not operate at full load.

These and further aspects are attained by providing an electric machine and a method in accordance with the accompanying claims.

### BRIEF DESCRIPTION OF THE DRAWINGS

Further characteristics and advantages will be more apparent from the description of a preferred but non-exclusive embodiment of the electric machine and method, illustrated by way of non-limiting example in the accompanying drawings, in which:

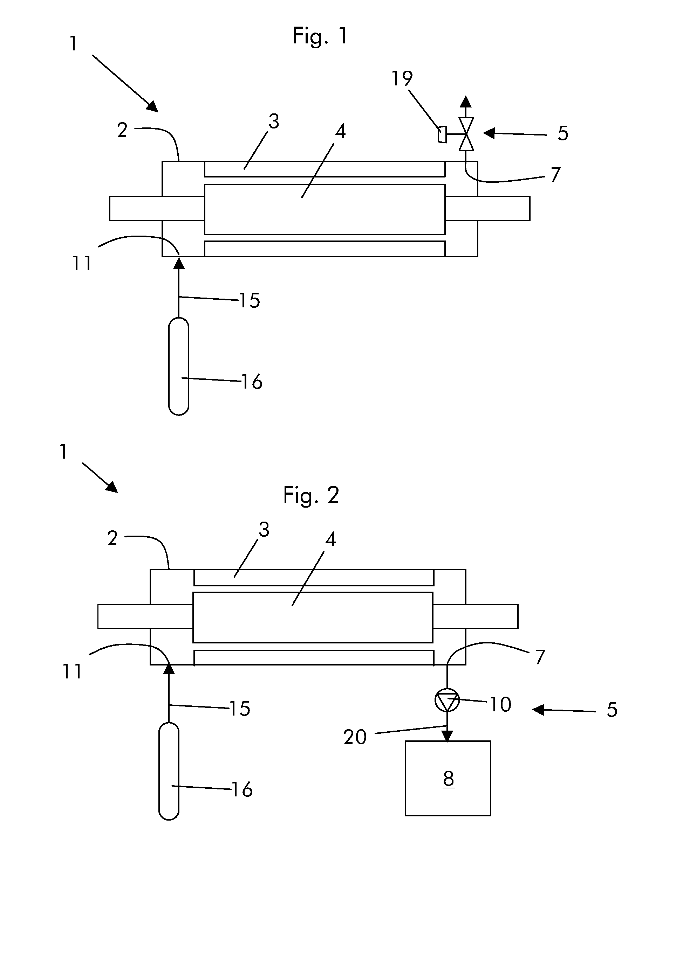

Figures 1 through 4 show different embodiments of the electric machine.

### DETAILED DESCRIPTION OF EXEMPLARY EMBODIMENTS

With reference to the figures, the electric machine 1 comprises a casing 2 that houses a stator 3 and a rotor 4. In addition the casing 2 contains a gas such as hydrogen; anyhow also different kinds of gas are possible, such as air.

The casing 2 has a regulating system 5 for the gas pressure as a function of a parameter indicative of the power output.

The regulating system 5 includes an outlet 7 for discharging the gas from the casing 2.

The regulating system 5 can also include a tank 8 connected to the outlet 7, for gathering the discharged gas.

This tank 8 can either be separate from the casing 2 or integral with the casing 2; in the last case the integral tank can be for example directly connected to the casing or can be inside the casing.

Preferably, a compressor 10 is provided between the outlet 7 and the tank 8, the compressor 10 for moving the gas from the casing into the tank 8.

Additionally, the casing can include an inlet 11 for the gas, and a supply 12 can be provided between the tank 8 and the casing 2, for supplying the gas gathered in the tank 8 into the casing 2. In this embodiment the supply 12 is preferably provided with a valve 13 to control the gas flow and pressure from the tank 8 into the casing 2.

Alternatively or in addition to the supply 12, the casing 2 can also include a supply 15 between a gas reservoir 16 and the casing 2, for supplying the gas into the casing. This reservoir 16 (if it is provided) is separate from the tank 8 (if it is provided).

In addition, the tank 8 can be filled with metal hydride with temperature control and can be provided with a hydrogen purifier.

During operation at full load the electric machine (such as a turbogenerator or hydro generator) operates with the gas such as hydrogen contained in the casing 2 at the rated pressure, such as for example 5 bar.

When the load of the electric machine is reduced and, for example, it starts to operate a part load, the hydrogen pressure inside the casing 2 is reduced, by discharging hydrogen to the outside atmosphere (figure 1) or gathering the hydrogen into the tank 8 (figures 2, 3, 4).

In addition, when the load of the electric machine 1 is increased again, the hydrogen pressure inside the casing 2 can be increased again, for example by using the reservoir 16 (if provided) and/or the tank 8.

In the following some example of the electric machine are described in detail.

### EXAMPLE 1

With reference to figure 1, the electric machine 1 has the casing 2 with the regulating system 5 that includes the outlet 7. In this embodiment a valve 19 is advantageously provided at the outlet 7, to control the gas discharge.

In addition, the reservoir 16 can be provided to supply hydrogen into the casing.

During operation of the electric machine 1 in this embodiment the gas is simply discharged outside of the casing 2 (i.e. to the atmosphere) in order to control the hydrogen pressure inside the casing 2.

### EXAMPLE 2

With reference to figure 2, the electric machine 1 has the casing 2 and the tank 8. In this example the tank 8 is separate from the casing 2 but, in different examples, it can be integral to it. The tank 8 is connected via the line 20 to the outlet 7 of the casing 2.

In addition the compressor 10 is provided on the line 20.

Also in this embodiment the reservoir 16 is shown connected to the casing; it is anyhow not mandatory.

During operation, the gas is discharged from the casing 2 by compressing it and providing it into the tank 8. This way the pressure inside the tank 8 can be higher than the pressure inside the casing 2. This for example can allow the use of a tank 8 of small size.

### EXAMPLE 3

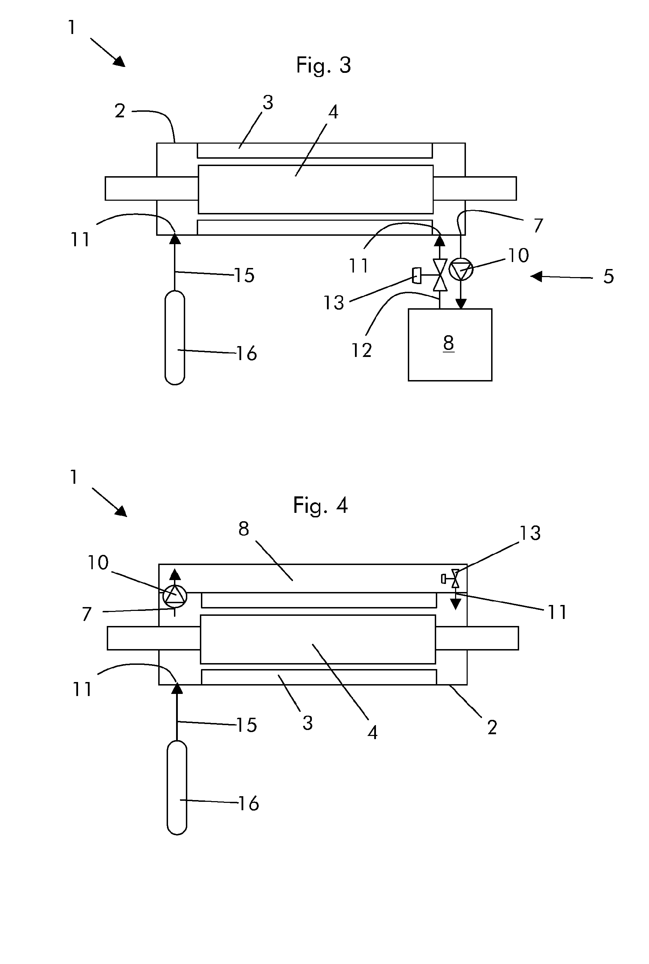

With reference to figure 3, an embodiment of the electric machine is shown similar to the embodiment of figure 2. In addition, the supply 12 with the valve 13 is provided between the tank 8 and the inlet 11 of the casing 2.

In this embodiment, thank to the compressor 10 that gather hydrogen in the tank 8 at a pressure higher than the pressure inside the casing 2, hydrogen can be supplied from the tank 8 into the casing 2 simply by opening the valve 13. For example the pressure in the casing 2 can be as high as about 5 bar and the pressure in the tank 8 can up to 100 bar or more.

### EXAMPLE 4

In figure 4 there is shown an example of an electric machine with the tank 8 integral with the casing 2. The casing 2 has the outlet 7 at the compressor 10 and the inlet 11. In addition, the compressor 10 can be integral with the casing 2 and/or tank 8.

Naturally, also in this embodiment, the reservoir 16 can be provided to supply hydrogen into the casing 2.

### METHOD

The present disclosure also refers to a method for operating an electric machine.

The method comprises regulating the gas pressure inside the casing 2 as a function of a parameter indicative of the power output.

Regulating includes discharging gas from the casing; in this respect usually the gas inside the casing 2 has a pressure higher than the atmospheric pressure, this is anyhow not mandatory because for example the discharge can be implemented via a compressor, to increase the gas pressure up to the atmospheric pressure.

Preferably discharging includes gathering the discharged gas into the tank 8, for example by increasing the gas pressure at a pressure higher than the gas pressure inside the casing 2.

Regulating also includes supplying gas into the casing 2.

For example supplying can include providing gas gathered in the tank 8 into the casing 2 and/or providing gas gathered in a reservoir 16 different from the tank 8 into the casing 2.

The parameter indicative of the power output can be any useful parameter; for example it can be one or more among the power output, the power factor, the mechanical power supplied to the rotor, the cooling fluid temperature.

In addition, regulating the pressure of the gas can also be achieved as a function of a parameter indicative of the gas pressure inside the casing 2 and/or ambient temperature.

Naturally the features described may be independently provided from one another.

In practice the materials used and the dimensions can be chosen at will according to requirements and to the state of the art.

### REFERENCE NUMBERS

- 1: electric machine
- 2: casing
- 3: stator
- 4: rotor
- 5: regulating system
- 7: outlet
- 8: tank
- 10: compressor
- 11: inlet
- 12: supply
- 13: valve
- 15: supply
- 16: reservoir
- 19: valve
- 20: line

## Claims

1. Method for operating an electric machine (1) comprising a casing (2) that houses a stator (3) and a rotor (4), the casing (2) containing a gas, **characterised by** regulating the gas pressure as a function of a parameter indicative of the power output.

2. Method according to claim 1, **characterised in that**, regulating includes discharging gas from the casing (2).

3. Method according to claim 2, **characterised in that** discharging includes gathering the discharged gas into a tank (8).

4. Method according to claim 3, **characterised in that** gathering the gas includes increasing the gas pressure at a pressure higher than the gas pressure inside the casing (2).

5. Method according to claim 2, **characterised in that** regulating also includes supplying gas into the casing (2).

6. Method according to claim 5, **characterised in that** supplying includes providing the gas gathered in the tank (8) into the casing.

7. Method according to claim 1, **characterised in that** the parameter indicative of the power output is at least one among the power output, the power factor, the mechanical power supplied to the rotor, the cooling fluid temperature.

8. Method according to claim 1, **characterised by** further regulating the pressure of the gas as a function of a parameter indicative of the gas pressure inside the casing (2) and/or ambient temperature.

9. An electric machine (1) comprising a casing (2) that houses a stator (3) and a rotor (4), the casing (2) containing a gas, **characterised in that** the casing (2) has a regulating system (5) for the gas pressure as a function of a parameter indicative of the power output.

10. The electric machine (1) of claim 9, **characterised in that** the regulating system (5) includes an outlet (7) for discharging the gas from the casing (2).

11. The electric machine (1) of claim 10, **characterised in that** the regulating system (5) also includes a tank (8) connected to the outlet (7) for gathering the discharged gas.

12. The electric machine (1) of claim 11, **characterised in that** the tank (8) is either separate from the casing (2) or integral with the casing (2).

13. The electric machine (1) of claim 9, **characterised by** further including a compressor (10) between the outlet (7) and the tank (10), the compressor (10) for moving the gas from the casing (2) into the tank (8).

14. The electric machine (1) of claim 9, **characterised in that** the casing (2) includes an inlet (11) for the gas, and **in that** a supply (12) is provided between the tank (8) and the casing (2), for supplying the gas gathered in the tank (8) into the casing (2).

15. The electric machine (1) of claim 9, **characterised in that** the casing (2) includes an inlet (11) for the gas, and **in that** a supply (15) is provided between a gas reservoir (16) and the casing (2), for supplying the gas into the casing (2).
